# EUROPÄISCHE PATENTSCHRIFT

(11) **EP 3 814 159 B1**
(45) Veröffentlichungstag und Bekanntmachung des Hinweises auf die Patenterteilung: **05.07.2023**
(21) Anmeldenummer: 18740132.8
(22) Anmeldetag: 29.06.2018
(51) Int. Cl.: B60K 1/00, F16H 63/34, F16H 57/04

(54) **GETRIEBEANORDNUNG MIT EINER PARKSPERRE UND ELEKTROANTRIEB MIT EINER SOLCHEN GETRIEBEANORDNUNG**
TRANSMISSION ARRANGEMENT COMPRISING A PARKING LOCK, AND ELECTRIC DRIVE COMPRISING A TRANSMISSION ARRANGEMENT OF SAID TYPE
ENSEMBLE D'ENGRENAGES COMPRENANT UN FREIN DE STATIONNEMENT ET ENTRAÎNEMENT ÉLECTRIQUE COMPRENANT UN ENSEMBLE D'ENGRENAGES DE CE TYPE

(43) Veröffentlichungstag der Anmeldung: 05.05.2021
(73) Patentinhaber: GKN Automotive Limited, Birmingham, West Midlands B37 7YE (GB)
(72) Erfinder: MIEBACH, Sascha, 53819 Neunkirchen-Seelscheid (DE); SCHMIDT, Mark, 53639 Königswinter (DE); SZILAGYI, Ervin, 53819 Neunkirchen-Seelscheid (DE)
(74) Vertreter: Neumann Müller Oberwalleney Patentanwälte PartG mbB
(86) Internationale Anmeldenummer: PCT/EP2018/067720
(87) Internationale Veröffentlichungsnummer: WO 2020/001794

(56) Entgegenhaltungen:
- EP-A2- 2 627 529
- WO-A1-2018/001476
- DE-A1- 4 244 685
- DE-U1-202010 001 318

## Beschreibung

Die Erfindung betrifft eine Getriebeanordnung mit einer Parksperre, insbesondere für einen Elektroantrieb eines Kraftfahrzeuges. Ein Elektroantrieb kann als alleiniger Antrieb für ein Kraftfahrzeug vorgesehen sein. Alternativ kann in hybriden Antriebskonzepten zusätzlich zum Elektroantrieb ein Verbrennungsmotor vorgesehen sein. Der Elektroantrieb und der Verbrennungsmotor können dann jeweils alleine für den Antrieb des Fahrzeugs sorgen oder gemeinsam überlagert das Kraftfahrzeug antreiben. Die elektrische Maschine des Elektroantriebs wird in der Regel bei hohen Drehzahlen betrieben. Die Getriebeanordnung des Elektroantriebs übernimmt die Funktion der Drehzahlanpassung zwischen den hohen Drehzahlen der elektrischen Maschine und den in der Regel langsameren Drehzahlen der Räder. Zudem erfolgt über die Getriebeanordnung ein Drehzahlausgleich zwischen den einzelnen Rädern.

Aus der WO 2018/001476 A1 ist eine Elektroantriebsanordnung mit einer Parksperre bekannt, die eine elektrische Maschine, ein Untersetzungsgetriebe und ein Differentialgetriebe aufweist, die in einer Gehäuseanordnung aufgenommen sind. Das Untersetzungsgetriebe setzt sich aus einer Stirnradeinheit und einer nachgeschalteten Planetenradeinheit, deren Planetenträger drehfest mit einem Differentialgehäuse des Differentialgetriebes verbunden ist, zusammen. Die Stirnradeinheit weist ein Antriebsritzel auf einer durch die elektrische Maschine drehend antreibbare Motorwelle auf, das mit einem Antriebsrad in Eingriff steht. Das Antriebsrad ist drehfest mit einer Getriebewelle verbunden, die auch das Sonnenrad der Planetenstufe umfasst. Die Motorwelle weist ein freies, auskragendes Wellenende auf, das in ein Parksperrengehäuse hineingeführt und mit dem ein Sperrenrad drehfest verbunden ist. Das Parksperrengehäuse bildet zusammen mit der Gehäuseanordnung einen gemeinsamen Raum, in dem die Getriebeelemente aufgenommen sind.

Der vorliegenden Erfindung liegt die Aufgabe zu Grunde, eine Getriebeanordnung mit einer Parksperre bereitzustellen, die konstante Einrastgeschwindigkeiten der Parksperre ermöglicht sowie langlebig und servicefreundlich ist. Des Weiteren soll es Aufgabe der Erfindung sein, einen Elektroantrieb mit einer solchen Getriebeanordnung bereitzustellen.

Zur Lösung der Aufgabe wird eine Getriebeanordnung für einen Elektroantrieb eines Kraftfahrzeugs vorgeschlagen, umfassend: eine Antriebswelle, ein Untersetzungsgetriebe, das von der Antriebswelle drehend antreibbar ist und ausgestaltet ist, eine eingeleitete Drehbewegung vom Schnellen ins Langsame zu übersetzen, eine Leistungsverzweigungseinheit, die mit dem Untersetzungsgetriebe antriebsverbunden ist und ausgestaltet ist, eine eingeleitete Drehbewegung auf zwei Ausgangsteile zu übertragen, eine Parksperreneinheit mit einem Parksperrenrad, das mit einem drehmomentübertragenden Glied im Leistungspfad zwischen der Antriebswelle und den Ausgangsteilen drehfest verbunden ist, und mit einem steuerbaren Sperrelement, das mit dem Parksperrenrad selektiv in Eingriff bringbar ist; wobei die Parksperreneinheit in einem Parksperrengehäuse angeordnet ist, das gegenüber einem Getriebegehäuse, in dem zumindest Teile des Untersetzungsgetriebes und der Leistungsverzweigungseinheit angeordnet sind, flüssigkeitsdicht abgedichtet ist, sodass ein erstes Ölbad in dem Getriebegehäuse von einem zweiten Ölbad in dem Parksperrengehäuse separiert ist.

Die erfindungsgemäße Getriebeanordnung weißt den Vorteil auf, dass das Parksperrenrad und das Sperrelement von einem zweiten, separaten Ölbad geschmiert werden können. Dadurch kann beim Einlegen der Parksperre eine definierte Ölversorgung des Kontaktbereiches zwischen Parksperrenrad und Sperrelement realisiert werden, sodass die Einrastgeschwindigkeit über weite Betriebsbereiche der Getriebeanordnung annähernd konstant gehalten werden kann. Zudem kann für das zweite Ölbad eine Ölsorte verwendet werden, die zu der Ölsorte des ersten Ölbades unterschiedlich ist und deren Spezifikation an die Anforderungen der Schmierung zwischen Parksperrenrad und Sperrelement angepasst ist. Darüber hinaus wird der Abrieb, der beim Einrasten der Parksperre, insbesondere bei Ratcheting, von dem Parksperrenrad und dem Sperrelement abgetragen wird, im zweiten Ölbad gesammelt und kontaminiert somit nicht das Öl des ersten Ölbades, was zu einer Erhöhung der Lebensdauer der Elemente des Untersetzungsgetriebes und der Leistungsverzweigungseinheit führt, die von dem ersten Ölbad mit Öl versorgt werden. Ferner wird durch die Anordnung der Parksperre in einem separaten Parksperrengehäuse im Servicefall bei hohem Verschleiß der gezielte Austausch von dem Öl des zweiten Ölbades sowie dem Parksperrenrad und dem Sperrelement ermöglicht.

Die flüssigkeitsdichte Dichtung zwischen dem Parksperrengehäuse und dem Getriebegehäuse kann durch Anordnung jedes geeigneten Dichtelementes zwischen den beiden Gehäusen erzielt werden. Das Dichtelement kann beispielsweise als eine rotatorische Dichtung, wie eine Radialwellendichtring, oder als eine berührungslose Dichtung, wie eine Labyrinthdichtung, ausgeführt sein.

Es versteht sich, dass in einer erfindungsgemäßen Getriebeanordnung nur die Elemente der Parksperreneinheit in dem Parksperrengehäuse angeordnet sein müssen, durch die direkt die Sperrwirkung auf das drehmomentübertragende Glied im Leistungspfad zwischen der Antriebswelle und den Ausgangsteilen ausgeübt wird, insbesondere das Parksperrenrad und das Sperrelement. Weitere Elemente der Parksperreneinheit die beispielsweise der Aktuatorik oder der Lagerung des Sperrenelementes zu zuordnenden sind, können entweder innerhalb oder außerhalb des Parksperrengehäuses angeordnet sein.

Das drehmomentübertragenden Glied im Leistungspfad zwischen der Antriebswelle und den Ausgangsteilen kann beispielsweise die Antriebswelle, eine Getriebewelle oder ein Gehäuse der Leistungsverzweigungseinheit sein, ohne darauf beschränkt zu sein.

Als Leistungsverzweigungseinheit soll jede Anordnung verstanden werden, die es ermöglicht die Leistung zumindest eines Antriebselementes auf zumindest zwei Abtriebswellen aufzuteilen und die insbesondere einen Drehzahlausgleich zwischen den Abtriebswellen ermöglicht. Die Leistungsverzweigungseinheit kann beispielsweise als ein Differentialgetriebe oder als eine Doppelreibkupplungseinheit (eTwinster) ausgeführt sein.

In einer möglichen Ausführungsform kann das Sperrelement von einem Spindelantrieb steuerbar sein, wobei der Spindelantrieb eine um eine Drehachse drehend gelagerte Spindelwelle mit einer Schleuderscheibe aufweist, wobei die Schleuderscheibe bei Rotation der Spindelwelle Öl des zweiten Ölbades in Richtung eines Kontaktbereiches des Parksperrenrades und des Sperrelementes fördert. Hierdurch kann dem Kontaktbereich des Parksperrenrades und des Sperrelementes gezielt Öl aus dem zweiten Ölbad zugeführt werden, während das Sperrelement in das Parksperrenrad einrastet. Hierzu kann der Spindelantrieb einen Elektromotor aufweisen, mit dem die Spindelwelle in beide Drehrichtungen antreibbar ist. Durch Verdrehen der Spindelwelle kann ein Steuerkonus über eine Spindelmutter axial in eine Richtung und durch die Beaufschlagung durch eine Rückstellfeder in die entgegengesetzte Richtung verschoben werden. Der Steuerkonus kann auf seiner Oberfläche eine Führungskontur aufweisen, durch die das Sperrelement je nach Kontaktpunkt mit dem Steuerkonus in Richtung des Parksperrenrades gedrängt oder von diesem entfernt wird. Durch das Rotieren der Spindelwelle zur Aktuierung des Sperrelementes wird auch die in das zweite Ölbad eingetauchte Schleuderscheibe in Rotation versetzt. Durch Reibung und die resultierende Fliehkraft wird Öl nach radial außen geschleudert und dem Kontaktbereich des Parksperrenrades und des Sperrelementes zugeführt.

In einer möglichen Ausführungsform kann die Schleuderscheibe zumindest einen Abwurfabschnitt aufweisen, der in einem Abwurfwinkel zu der Drehachse der Spindelwelle ausgerichtet ist, wobei der Abwurfwinkel kleiner gleich 90° und/oder größer 25°, insbesondere größer 45°, ist. Hierdurch kann das durch die Fliehkraft nach radial au-ßen geschleuderte Öl gezielt in eine Richtung gefördert werden, beispielsweise direkt in den Kontaktbereich des Parksperrenrades und des Sperrelementes. Durch die Wahl eines Abwurfwinkels kleiner 90° können somit auch Bereiche mit Öl versorgt werden, die sich nicht direkt oberhalb der Schleuderscheibe befinden. Insbesondere kann die Schleuderscheibe somit seitlich versetzt zu dem Bereich in den das Öl gefördert werden soll angeordnet werden, was zu einer erhöhten Flexibilität in der Bauraumgestaltung der Getriebeanordnung führt. Die Schleuderscheibe kann auch mehrerer Abwurfabschnitte umfassen, die unterschiedliche Abwurfwinkel aufweisen, sodass mehrere Bereiche gezielt mit Öl versorgt werden können. So kann die Schleuderscheibe beispielsweise einen oder mehrere erste Abwurfabschnitte mit einem Abwurfwinkel von 90° und ein oder mehrere zweite Abwurfabschnitte mit einem beispielhaften Abwurfwinkel von 75° aufweisen. Durch die ersten Abwurfabschnitte wird das Öl gerade nach radial außen gefördert und kann beispielsweise die Ausnehmung des Parksperrenrades, die gerade in den Kontaktbereich des Parksperrenrades und des Sperrelementes einläuft, mit Öl versorgen, während durch die zweiten Abschnitte das Öl in schräger Richtung nach radial außen gefördert wird und beispielsweise der Kontaktbereich des Parksperrenrades und des Sperrelementes direkt mit Öl versorgt wird. In einer möglichen Ausführungsform kann die Schleuderscheibe bezüglich der Drehachse der Spindelwelle in axialer Überdeckung mit dem Parksperrenrad angeordnet ist. Somit kann sichergestellt werden, dass das direkt nach radial außen geförderte Öl zumindest über das Parksperrenrad in den Kontaktbereich des Parksperrenrades und des Sperrelementes gelangt.

In einer möglichen Ausführungsform kann in einer Einbaulage der Getriebeanordnung in einem beruhigten Zustand ein Niveau des ersten Ölbades von einem Niveau des zweiten Ölbades abweichen. Hierdurch kann eine bauraumoptimierte Anordnung des Getriebegehäuses und des Parksperrengehäuses erzielt werden. Es ist, falls durch den zur Verfügung stehenden Bauraum erforderlich, auch denkbar, dass das Niveau des ersten Ölbades und das Niveau des zweiten Ölbades ein gleiches Nennniveau aufweisen.

In einer weiteren Ausführungsform kann ein Niveau des zweiten Ölbades in einer Einbaulage der Getriebeanordnung in einem beruhigten Zustand in vertikaler Richtung unterhalb eines Wirkbereiches des Parksperrenrades liegen. Als Wirkbereich soll das Volumen verstanden werden, das von dem Parksperrenrad nach einer vollständigen Rotation um die Drehachse überstrichen wurde. Es wird somit ein Planschen des Parksperrenrades im zweiten Ölbad vermieden. Hierdurch wird der Wirkungsgrad der Getriebeanordnung erhöht, während gleichzeitig der Kontaktbereich des Parksperrenrades und des Sperrelementes mit einer definierten Menge Öl versorgt werden kann, die unabhängig von der Drehzahl des drehmomentübertragenden Gliedes im Leistungspfad zwischen der Antriebswelle und den Ausgangsteilen ist, mit dem das Parksperrenrad drehfest verbunden ist.

In einer weiteren Ausführungsform kann ein Niveau des zweiten Ölbades in einer Einbaulage der Getriebeanordnung in einem beruhigten Zustand in vertikaler Richtung unterhalb der Drehachse der Spindelwelle liegen. Hierdurch werden Planschverluste bei der Rotation der Spindelwelle in dem zweiten Ölbad verringert und die Steuerung der Rotation der Spindelwelle wird erleichtert. In einer weiteren Ausführungsform kann der Spindelantrieb einen Steuerkonus aufweisen, durch den das Sperrelement reversibel von einer Freigabestellung, in der das Parksperrenrad gegenüber dem Sperrelement frei drehen kann, in eine Sperrstellung, in der eine Drehung des Parksperrenrades um die Längsachse durch das Sperrelement blockiert ist, überführbar ist, wobei der Steuerkonus in das zweite Ölbad in einer Einbaulage der Getriebeanordnung in einem beruhigten Zustand maximal mit zwei Dritteln eines größten Außenradius des Steuerkonus, insbesondere maximal mit einem Drittel eines größten Außenradius des Steuerkonus, eingetaucht ist. Der Steuerkonus muss in dieser Ausführungsform nur teilweise gegen die Trägheit des Öles in dem zweiten Öl axial bewegt werden, sodass ein schnelleres Ein- bzw. Auslegen der Parksperre ermöglicht wird. Das Niveau des zweiten Ölbades kann insbesondere auch so gewählt werden, dass ein Spindellager des Spindelantriebes zumindest teilweise in das zweite Ölbad eintaucht.

In einer weiteren Ausführungsform kann das Parksperrenrad mit einem freien Wellenende des drehmomentübertragenden Gliedes im Leistungspfad zwischen der Antriebswelle und den Ausgangsteilen drehfest verbunden sein. Unter freiem Wellenende soll jedes über eine Lageranordnung überstehende oder auskragende Teil des drehmomentübertragenden Gliedes im Leistungspfad zwischen der Antriebswelle und den Ausgangsteilen verstanden werden. Hierdurch wird erreicht, dass ein Gehäuseelement des Parksperrengehäuses unabhängig von einer Demontage des drehmomentübertragenden Gliedes im Leistungspfad zwischen der Antriebswelle und den Ausgangsteilen demontiert werden kann. Somit wird die Zugänglichkeit der Parksperre im Servicefall erhöht. Es ist allerdings grundsätzlich auch denkbar, dass das drehmomentübertragende Glied im Leistungspfad zwischen der Antriebswelle und den Ausgangsteilen in dem Gehäuseelement des Parksperrengehäuses drehend gelagert wird und das Parksperrenrad zwischen den Lagerelementen der zugehörigen Lageranordnung angeordnet ist.

In einer möglichen Ausführungsform kann das Getriebegehäuse zumindest ein erstes Gehäuseteil und ein zweites Gehäuseteil umfassen und einen Getrieberaum einschlie-ßen, in dem das Untersetzungsgetriebe und die Leistungsverzweigungseinheit zumindest teilweise angeordnet sind, und das Parksperrengehäuse kann zumindest von dem zweiten Gehäuseteil und einem dritten Gehäuseteil gebildet werden und einen Parksperrenraum einschließen, in dem die Parksperreneinheit zumindest teilweise angeordnet ist. In einer weiteren Ausführungsform können der Getrieberaum und der Parksperrenraum durch einen Druckausgleichskanal verbunden sein, wobei ein erster Einlass des Druckausgleichskanals in dem Getrieberaum und ein zweiter Einlass des Druckausgleichskanals in dem Parksperrenraum angeordnet ist. Bei hohen Druckunterschieden in den beiden Räumen kann die Dichtwirkung eines Dichtelementes, das zwischen dem Getriebegehäuse und dem Parksperrengehäuse angeordnet ist, zumindest kurzfristig versagen, sodass das Öl des ersten Ölbades mit dem Öl des zweiten Ölbades kontaminiert wird oder andersherum. Durch den Druckausgleichskanal wird sichergestellt, dass die Drücke in dem Getrieberaum und dem Parksperrenraum weitgehend identisch sind, sodass das Dichtelement die beiden Räume zuverlässig voneinander trennen kann.

Um zu verhindern, dass über den Druckausgleichkanal das Öl des ersten Ölbades mit dem Öl des zweiten Ölbades kontaminiert wird, kann der erste Einlass oberhalb des zweiten Einlasses angeordnet sein. Das Öl des zweiten Ölbades müsste in diesem Fall entgegen der Schwerkraft den Druckausgleichskanal hinaufsteigen. Dies kann durch bei der Wahl einer ausreichenden Länge, Steighöhe und eines ausreichend gro-ßen Durchmessers des Druckausgleichskanals weitgehend ausgeschlossen werden.

Um zu verhindern, dass über den Druckausgleichkanal das Öl des zweiten Ölbades mit dem Öl des ersten Ölbades kontaminiert wird, kann angrenzend an den ersten Einlass des Druckausgleichskanals ein spritzölfreier Labyrinthraum angeordnet sein. Hierdurch wird verhindert, dass in den Bereich des ersten Einlasses Spritzöl des ersten Ölbades gelangt und von der Schwerkraft durch den Druckausgleichskanal in das zweite Ölbad gefördert wird.

Der Labyrinthraum kann zumindest einen Blendenabschnitt und zumindest einen Sammelabschnitt aufweisen. Unter Blendenabschnitt soll eine Einschnürung des Labyrinthraums verstanden werden, die insbesondere auch am Eingang des Labyrinthraums angeordnet sein kann. Die Sammelabschnitte des Labyrinthraums fangen Spritzöl, das durch einen Blendenabschnitt eingetreten ist auf und leiten dieses wiederum in das Ölbad zurück. Insbesondere sind die Sammelräume so ausgestaltet, dass sie keine Senken aufweisen, in denen sich Spritzöl dauerhaft ansammeln kann. Der Labyrinthraum kann zumindest teilweise durch das zweite Gehäuseelement und/oder das erste Gehäuseelement gebildet werden. Dabei kann der Labyrinthraum in einem von dem ersten Gehäuseelement und dem zweiten Gehäuseelement integriert sein, insbesondere eingegossen sein.

In einer Ausführungsform kann zumindest in einem von dem Getriebegehäuse und dem Parksperrengehäuse ein Entlüftungselement aufgenommen sein, durch das der Getrieberaum und/oder der Parksperrenraum gegenüber der Umwelt entlüftbar ist.

Ein Elektroantrieb mit einer erfindungsgemäßen Getriebeanordnung bietet analog dieselben Vorteile, wie oben im Zusammenhang mit der Getriebeanordnung beschrieben, worauf abkürzend verwiesen wird.

Bevorzugte Ausführungsbeispiele werden nachstehend anhand der Zeichnungsfiguren erläutert. Hierin zeigt
- Figur 1a: schematisch einen Elektroantrieb mit einer nicht erfindungsgemäßen Getriebeanordnung, die zum Verständnis beschrieben wird;
- Figur 1b: schematisch einen Elektroantrieb mit einer erfindungsgemäßen Getriebeanordnung in einer ersten Ausführungsform;
- Figur 2: einen Elektroantrieb mit einer erfindungsgemäßen Getriebeanordnung in einer zweiten Ausführungsform in einer perspektivischen Ansicht;
- Figur 3: den Elektroantrieb aus Figur 2 in einer Schnittansicht entlang der Schnittebene II - II;
- Figur 4: einen Ausschnitt eines Längsschnitts durch das zweite Gehäuseteil des Elektroantriebs aus Figur 2;
- Figur 5: einen Ausschnitt der Seitenansicht von rechts des zweiten Gehäuseteils des Elektroantriebs aus Figur 4;
- Figur 6: einen Ausschnitt eines Querschnittes des Elektroantriebes aus Figur 3 entlang des Schnittverlaufs III - III;
- Figur 7: einen vergrößerten Ausschnitt der Figur 6 im Bereich zwischen Schleuderscheibe und Steuerkonus;
- Figur 8a: eine Schleuderscheibe in einer ersten Ausführungsform;
- Figur 8b: eine Schleuderscheibe in einer zweiten Ausführungsform;
- Figur 8c: eine Schleuderscheibe in einer dritten Ausführungsform;
- Figur 9a: die Schleuderscheibe in der ersten Ausführungsform in einem Längsschnitt entlang des Schnittverlaufes Vllla - Vllla;
- Figur 9b: die Schleuderscheibe in der zweiten Ausführungsform in einem Längsschnitt entlang des Schnittverlaufes Vlllb - Vlllb; und
- Figur 9c: die Schleuderscheibe in einer dritten Ausführungsform in einem Längsschnitt entlang des Schnittverlaufes VIIIc - VIIIc.

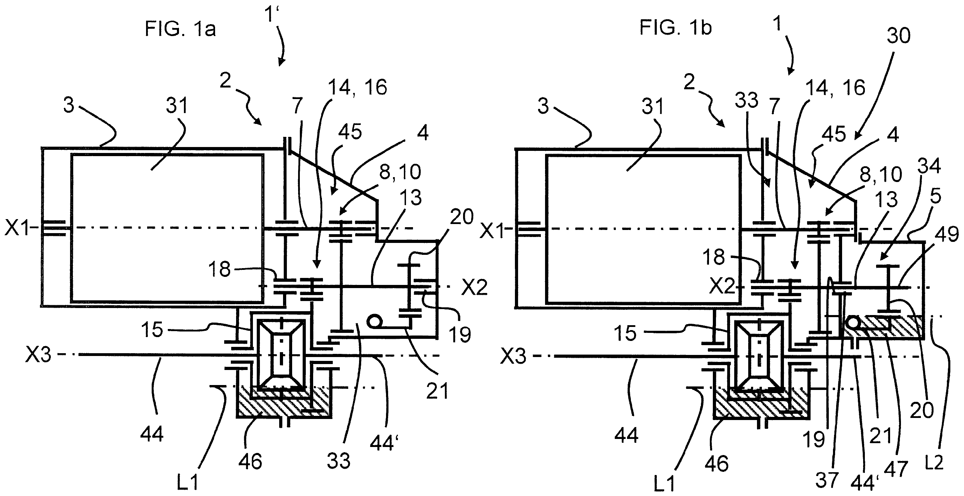

In Figur 1a ist ein Elektroantrieb 1' dargestellt, bei dem eine Gehäuseanordnung 2 umfassend ein erstes Gehäuseelement 3 und eine zweites Gehäuseelement 4 einen Getrieberaum 33 einschließt, in dem ein Untersetzungsgetriebe 45 und eine Differentialanordnung 15 miteinander leistungsverbunden angeordnet sind. Das Untersetzungsgetriebe 45 weist eine durch eine elektrische Maschine 31 um eine Drehachse X1 drehend antreibbare Motorwelle 7 mit einem Antriebsritzel 8 auf, das mit einem Gegenrad 10 in Eingriff steht. Das Gegenrad 10 ist drehfest auf einer Zwischenwelle 13 angeordnet, die mit einem Lager 18 im ersten Gehäuseelement 3 sowie einem Lager 19 im zweiten Gehäuseelement 4 drehend gelagert ist. Mit der Zwischenwelle 13 ist zudem ein Parkrad 20 drehfest verbunden, dessen Rotationsfreiheitsgrad um eine Drehachse X2 durch das Einlegen einer Parkklinke 21 gefesselt werden kann, sodass der Elektroantrieb blockiert wird. Ein Antriebsritzel 14 der Zwischenwelle 13 steht im Eingriff mit einem Ringrad 16, das mit einem Differentialgehäuse 17 der Differentialanordnung 15 fest verbunden ist. Das Ringrad 16 taucht in ein erstes Ölbad 46 ein, das in dem Getrieberaum 33 aufgenommen ist und ein Niveau L1 aufweist. Bei Rotation des Ringrades 16 wird das Öl des ersten Ölbades 46 in dem Getrieberaum 33 verteilt und schmiert dabei unter anderem das Parkrad 20 und die Parkklinke 21. Hierbei gelangt je nach Drehzahl des Ringrades 16 mehr oder weniger Öl in den Kontaktbereich zwischen Parkrad 20 und Parkklinke 21. Einerseits führt dies gegebenenfalls zu einer Minderschmierung in langsamen Betriebszuständen, andererseits führt die inkonstante Schmierung des Kontaktbereich zwischen Parkrad 20 und Parkklinke 21 zu einer Variabilität der kritischen Einrastgeschwindigkeit, bei der die Parkklinke 21 nicht mehr von dem Parkrad 20 abgewiesen wird und ein Zahn der Parkklinke 21 in eine Ausnehmung des Parkrades 20 einrastet.

Demgegenüber wird in Figur 1b schematisch eine erfindungsgemäße Getriebeanordnung 30 bzw. ein erfindungsgemäßer Elektroantrieb 1 in einer ersten Ausführungsform gezeigt, der sich von dem Elektroantrieb 1 bzw. Getriebe der Figur 1a durch die Anordnung des Parkrades 20 und der Parkklinke 21 in einem Parksperrenraum 34 unterscheidet. Für Gemeinsamkeiten sei daher auf die Ausführungen zu Figur 1a verwiesen, wobei gleiche bzw. einander entsprechende Elemente mit gleichen Bezugszeichen versehen sind.

Bei der erfindungsgemäßen Getriebeanordnung 30 bzw. Elektroantrieb 1 ist die Zwischenwelle 13 durch eine Wand des zweiten Gehäuseelements 4 hindurchgeführt und weist angrenzend an das Lager 19 ein freies, auskragendes Wellenende 49 auf. Das freie Wellenende 49 ragt dabei in einen Parksperrenraum 34 hinein, der von dem zweiten Gehäuseelement 4 und einem dritten Gehäuseelement 5, das auch als Gehäusedeckel ausgeführt sein kann, eingeschlossen wird. Auf dem freien Wellenende 49 ist das Parkrad 20 drehfest angeordnet, das mit einer ebenfalls in dem Parksperrenraum 34 angeordneten Parkklinke 21 selektiv in Eingriff bringbar ist.

Der Parksperrenraum 34 ist mit einem Dichtelement 37 gegenüber dem Getrieberaum 33 abgedichtet, das im vorliegenden Fall als schematisch dargestellte Labyrinthdichtung ausgeführt ist. Es ist allerdings auch jedes andere Dichtelement denkbar, beispielsweise eine rotatorische Dichtung oder eine andersartige berührungslose Dichtung. In dem Parksperrenraum 34 ist ein zweites Ölbad 47 mit einem Niveau L2 aufgenommen, wobei das Niveau L2 des zweiten Ölbads 47 vertikal oberhalb des Niveaus L1 des ersten Ölbades 46 liegt. Je nach Bauraumanforderung an den Elektroantrieb, ist es auch denkbar, dass das Niveau L2 des zweiten Ölbads 47 vertikal unterhalb des Niveaus L1 des ersten Ölbades 46 liegt oder die beiden Niveaus L1, L2 ein gemeinsames Nennniveau aufweisen. Durch die Separierung des ersten Ölbades 46 von dem zweiten Ölbad 47 kann das Niveau L2 und die Ölsorte des zweiten Ölbades 47 an die Anforderungen der Parksperren spezifisch angepasst werden.

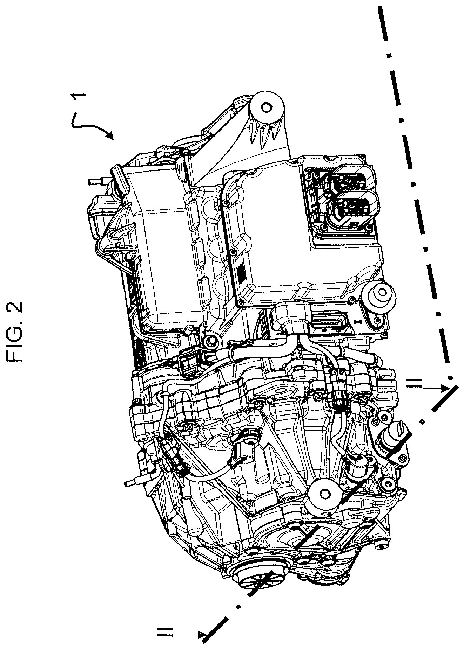

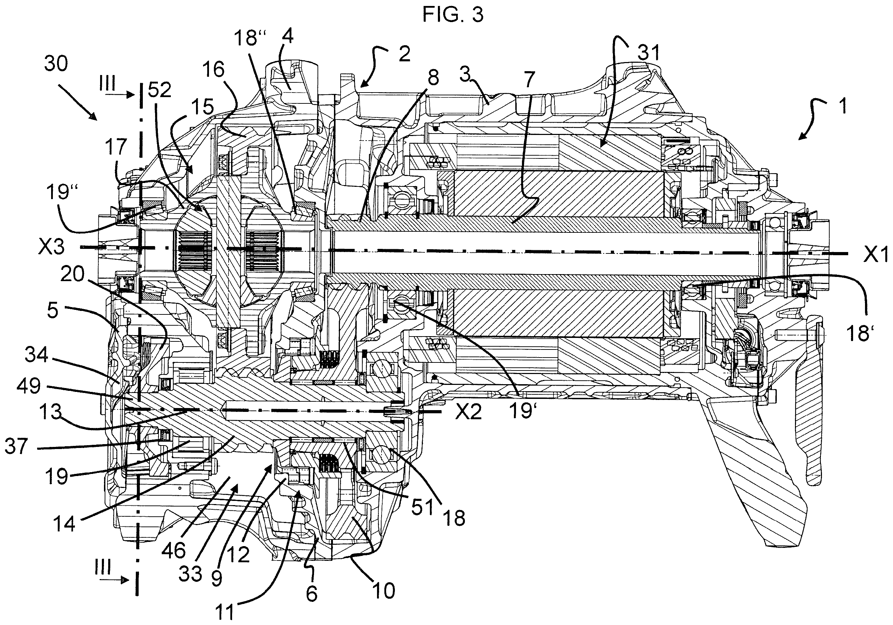

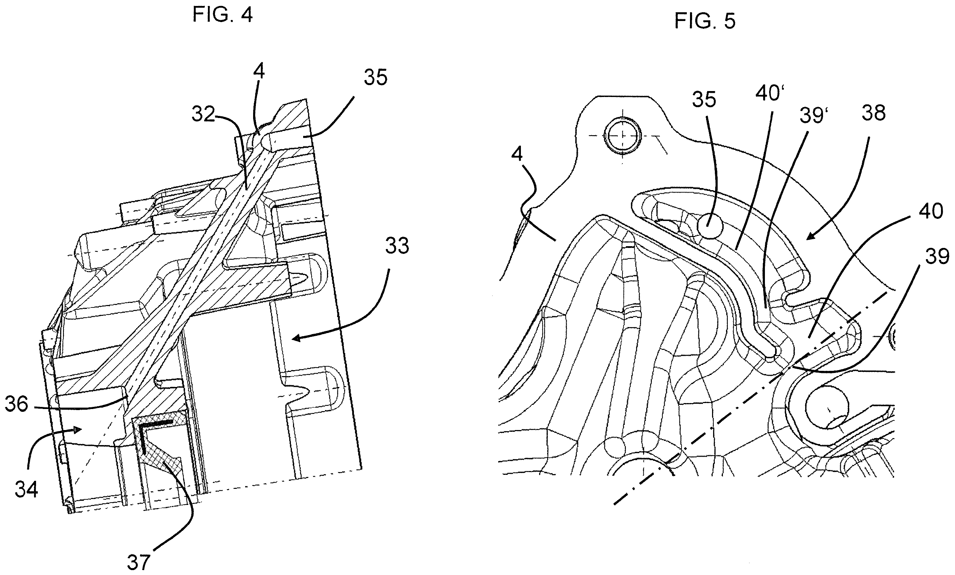

In den Figuren 2 bis 7, die im Folgenden gemeinsam beschrieben werden, wird eine erfindungsgemäße Getriebeanordnung 30 bzw. ein erfindungsgemäßer Elektroantrieb 1 mit einem solchen Getriebe in einer zweiten Ausführungsform gezeigt.

Eine elektrische Maschine 31 ist in einem ersten Gehäuseelement 3 einer Gehäuseanordnung 2 aufgenommen und umfasst eine um eine Drehachse X1 drehend antreibbare Motorwelle 7. Die Motorwelle 7 weist an einem Wellenende ein Antriebsritzel 8 auf, dass zusammen mit einem verzahnten Gegenrad 10 eine erste Getriebestufe bildet. Das Gegenrad 10 ist mit einem Lager 51, beispielsweise einem Nadellager, drehend auf einer Zwischenwelle 13 gelagert und kann über eine Kupplungsanordnung 11, die in einem Kupplungssitz 12 der Zwischenplatte 6 axial abgestützt ist, wahlweise mit dieser zur Übertragung eines Drehmoments verbunden oder von dieser getrennt werden. Die Zwischenwelle 13 umfasst zudem ein Antriebsritzel 14, das in den Wellenkörper der Zwischenwelle 13 integriert ist und zusammen mit einem Ringrad 16 eine zweite Getriebestufe bildet. Das Ringrad 16 ist fest mit einem Differentialgehäuse 17 einer Differentialanordnung 15 verbunden. Die Differentialanordnung 15 umfasst zudem einen Differentialrädersatz 52, der innerhalb des Differentialgehäuses 17 angeordnet ist und mit dem nicht dargestellte Abtriebswellen verbindbar sind.

Die Getriebeanordnung umfassend das Antriebsritzel 8, das Gegenrad 10, die Kupplungsanordnung 11, die Zwischenwelle 13, das Ringrad 16 und die Differentialanordnung 15 ist in einem Getrieberaum 33 angeordnet, der durch das erste Gehäuseelement 3, eine Zwischenplatte 6 und ein zweites Gehäuseelement 4 gebildet wird. Dabei sind die erste Getriebestufe 8, 10 und die zweite Getriebestufe 14, 16 auf unterschiedlichen Seiten der Zwischenplatte 6 angeordnet.

Die Zwischenwelle 13 ist mit einem ersten Lager 18, das in dem ersten Gehäuseelement 3 aufgenommen ist, und mit einem zweiten Lager 19, das in dem zweiten Gehäuseelement 4 aufgenommen ist, um die Drehachse X2 gelagert. Die Drehachse X2 ist dabei um den Betrag des Achsabstandes der ersten Getriebestufe parallel versetzt zur Drehachse X1 der Motorwelle 7 angeordnet. Die Zwischenwelle 13 erstreckt sich durch eine Öffnung 9 der Zwischenplatte 6 hindurch.

Die Differentialanordnung 15 ist mit einem ersten Lager 18", das in der Zwischenplatte 6 aufgenommen ist, und einem zweiten Lager 19", das in dem zweiten Gehäuseelement 4 aufgenommen ist, um eine Drehachse X3 gelagert. Die Drehachse X3 ist dabei koaxial zu der Drehachse X1 der Motorwelle 7 angeordnet.

Der Getrieberaum 33 wird durch die Zwischenplatte 6 in zwei Teilbereiche unterteilt, die über die Öffnung 9 im Bereich der Kupplungsanordnung 11 miteinander verbunden sind, wobei in dem ersten Teilbereich die erste Getriebestufe 8, 10 und in dem zweiten Teilbereich die zweite Getriebestufe 14, 16 angeordnet sind. In dem Getrieberaum 33 ist ein erstes Ölbad 46 mit einem ersten Niveau aufgenommen, das sich in die beiden Teilbereiche erstreckt. Es ist auch denkbar, dass in der Öffnung 9 der Zwischenplatte 6 ein Dichtelement angeordnet wird, sodass die beiden Teilbereich voneinander getrennt sind. Somit könnte in den beiden Teilbereichen jeweils ein separates Ölbad vorgesehen werden, dessen Niveau und/oder Ölsorte an die jeweilige Getriebestufe angepasst ist.

Die Zwischenwelle 13 weist angrenzend an das Lager 19 ein freies, auskragendes Wellenende 49 auf, das in einen Parksperrenraum 34 hinein ragt. Der Parksperrenraum 34 wird dabei von dem zweiten Gehäuseelement 4 und einem dritten Gehäuseelement 5, das als Gehäusedeckel ausgeführt ist, eingeschlossen. In dem Parksperrenraum 34 ist ein zweites Ölbad 47 mit einem Niveau L2 aufgenommen. Durch ein Dichtelement 37, beispielsweise ein Radialwellendichtring, ist der Parksperrenraum 34 flüssigkeitsdicht gegenüber dem Getrieberaum 33 abgedichtet. Um eine zuverlässige Dichtwirkung des Dichtelementes 37 zu gewährleisten, ist im zweiten Gehäuseelement 4 ein Druckausgleichskanal 32 angeordnet, der einen ersten Einlass 35 in Richtung des Getrieberaums 33 und einen zweiten Einlass 36 in Richtung des Parksperrenraums 34 aufweist. Durch den Druckausgleichskanal 32 können Druckunterschiede zwischen dem Getrieberaum 33 und dem Parksperrenraum 34 ausgeglichen werden, die eine Öldurchtritt durch das Dichtelement 37 bedingen können. Um ein Öleintritt durch den Druckausgleichskanal 32 zu vermeiden ist der erste Einlass 35 oberhalb des zweiten Einlasses 36 angeordnet. Somit kann ein Öleintritt von dem Parksperrenraum 34 in den Getrieberaum 33 vermieden werden. Zusätzlich ist angrenzend an den ersten Einlass 35 ein Labyrinthraum 38 angeordnet, der durch Vorsprünge in dem zweiten Gehäuseelement 4 und durch die Zwischenplatte 6 gebildet wird. Der Labyrinthraum 38 umfasst dabei zwei Blendenabschnitte 39, 39` und zwei Sammelabschnitte 40, 40`, die gemeinsam einen Eintritt von Spritzöl aus dem ersten Ölbad 46 in den ersten Einlass verhindern und das Spritzöl in das erste Ölbad 46 zurückführen.

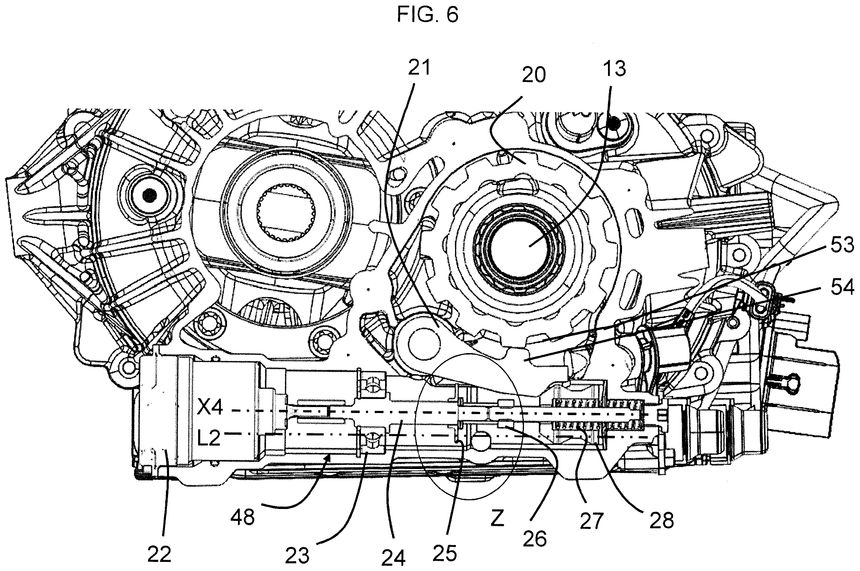

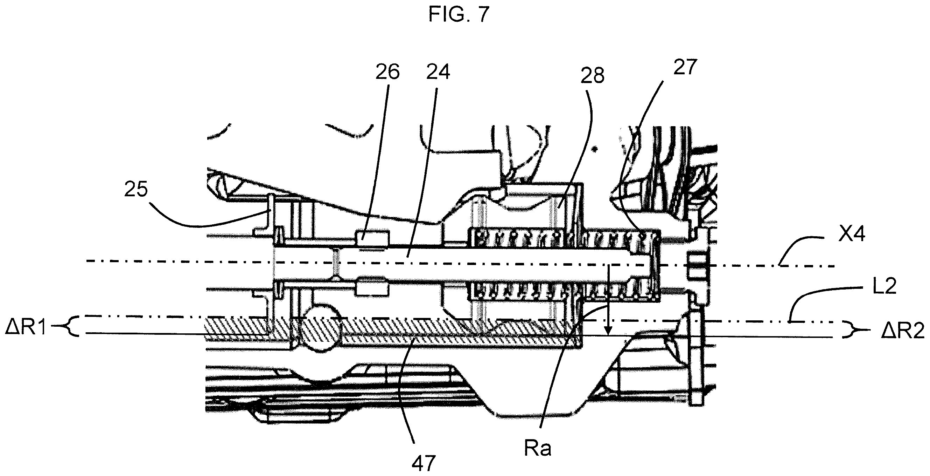

In dem Parksperrenraum 34 ist zudem eine Parkklinke 21 angeordnet, die über einen Spindelantrieb 48 reversibel in eine Freigabestellung, in der das Parkrad 20 frei um die Drehachse X2 drehen kann, und in eine Sperrstellung, in der der Rotationsfreiheitsgrad des Parkrades 20 um die Drehachse X2 gefesselt und der Elektroantrieb blockiert ist, überführt werden kann. In der Sperrstellung rastet ein Zahn 54 der Parkklinke 21 in einer Ausnehmung 53 des Parkrades 20 ein. Der Spindelantrieb 48 umfasst einen Steuerkonus 28, der eine Führungskontur aufweist. Je nach Auflagepunkt der Parcklinke 21 auf der Führungskontur wird die Parklinke 21 in den Wirkbereich des Parkrades 20 hineingeschwenkt oder aus dem Wirkbereich herausgeschwenkt. Der Steuerkonus 28 ist axialbeweglich angeordnet und kann von einer Spindelmutter 26 in eine Richtung, in der dargestellten Ausführung in die Richtung einer Freigabestellung, geschoben werden. Hierzu kann die Spindelmutter 26 durch Verdrehen einer Spindelwelle 24 um die Drehachse X4 mittels eines Stellmotors 22 ihrerseits axial bewegt werden. Ausgehend von einer Freigabestellung kann die Spindelmutter 26 in Richtung einer Sperrstellung, die in den Figuren 6 und 7 dargestellt ist, verfahren werden. Dabei wird der Steuerkonus 28 von einer Rückstellfeder 27 der Spindelmutter 26 nachgeführt. Im Falle einer Zahn-auf-Zahn-Stellung oder bei Ratcheting verbleibt der Steuerkonus 28 zunächst in der Freigabestellung und schwenkt den Zahn 54 der Parkklinke 21 erst beim Unterschreiten der kritischen Einrastgeschwindigkeit vollständig in den Wirkbereich des Parkrads 20 ein. Während des Ratchetings wird der Steuerkonus 28 durch die Parkklinke 21 axial abgewiesen und führt dabei eine schwingende Bewegung gegen die Rückstellfeder 27 aus.

Ist der Steuerkonus 28 in das zweite Ölbad 47 eingetaucht, so wirkt die Trägheit des Öles wie ein Dämpfer auf die schwingende Bewegung und beeinflusst hierdurch die kritische Einrastgeschwindigkeit. Um den Einfluss des zweiten Ölbades 47 auf die kritische Einrastgeschwindigkeit zu minimieren beziehungsweise weitgehend konstant zu halten, kann das Niveau L2 des zweiten Ölbads 47 so gewählt werden, dass die Eintauchtiefe ΔR2 des Steuerkonus 28 kleiner als 2/3 seines Außenradius Ra ist, insbesondere kleiner als 1/3 seines Außenradius Ra. Die Wahl des Niveaus L2 des zweiten Ölbads 47 kann zusätzlich so erfolgen, dass ein Lager 23 zur drehenden Lagerung der Spindelwelle 24 in das zweite Ölbad 47 eingetaucht ist.

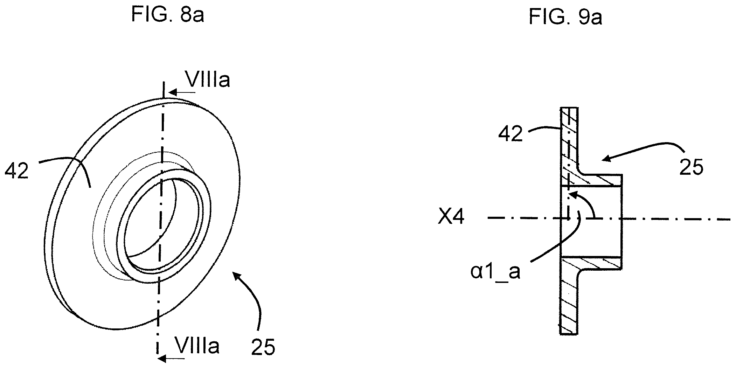

Mit der Spindelwelle 24 ist eine Schleuderscheibe 25 fest verbunden, die mit einer Eintauchtiefe ΔR1 in das zweite Ölbad 47 eingetaucht ist. Bei Rotation der Spindelwelle 24 zur Aktuierung des Steuerkonus 28 wird durch die Fliehkraft Öl aus dem zweiten Ölbad 47 von der Schleuderscheibe 25 nach radial außen geschleudert und der Kontaktbereich zwischen Parkrad 20 und Parkklinke 21 wird mit Öl versorgt. Hierzu kann die Schleuderscheibe 25 bezogen auf die Drehachse X4 in axialer Überdeckung mit dem Parkrad 20 angeordnet sein. Die in der zweiten Ausführungsform des Elektroantriebes 1 eingesetzte Schleuderscheibe 25 ist in Figur 8a in einer perspektivischen Darstellung und in Figur 9a in einem Längsschnitt dargestellt. Die Schleuderscheibe 25 weist einen umlaufenden Abwurfabschnitt 42 auf, der in einem Abwurfwinkel α1_a von 90° zur Drehachse X4 angeordnet ist. Bei dieser Ausgestaltung wird das Öl des zweiten Ölbades 47 hauptsächlich in radialer Richtung ab geschleudert. Wie aus Figur 6 zu erkennen, versorgt die Schleuderscheibe 25 das Parkrad 20 mit Öl, das das Öl nachfolgend in den Kontaktbereich zwischen Parkrad 20 und Parkklinke 21 trägt.

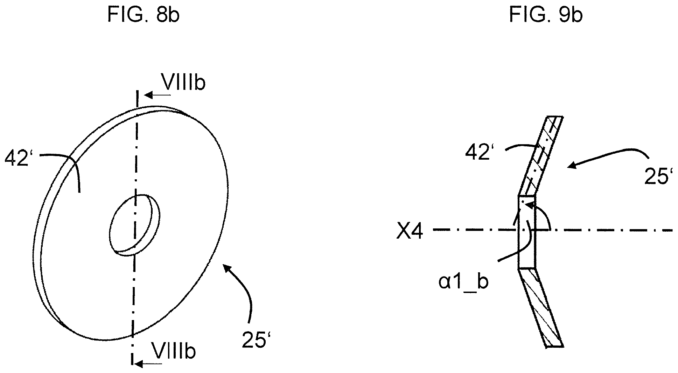

In Figur 8b und 9b ist eine zweite mögliche Ausgestaltung der Schleuderscheibe 25' dargestellt. Die Schleuderscheibe 25' weist einen umlaufenden Abwurfabschnitt 42' auf, der in einem Abwurfwinkel α1_b von beispielsweise ca. 70° zur Drehachse X4 angeordnet ist. Bei dieser Ausgestaltung wird das Öl des zweiten Ölbades 47 in eine Richtung mit einer radialen und einer axialen Komponente ab geschleudert. Hierdurch lässt sich ein axial von der Schleuderscheibe 25' versetzter Bereich gezielt mit Öl versorgen. Im Falle der Anordnung gemäß Figur 6 könnte durch die Schleuderscheibe 25' Öl direkt in den Kontaktbereich zwischen Parkrad 20 und Parkklinke 21 gefördert werden.

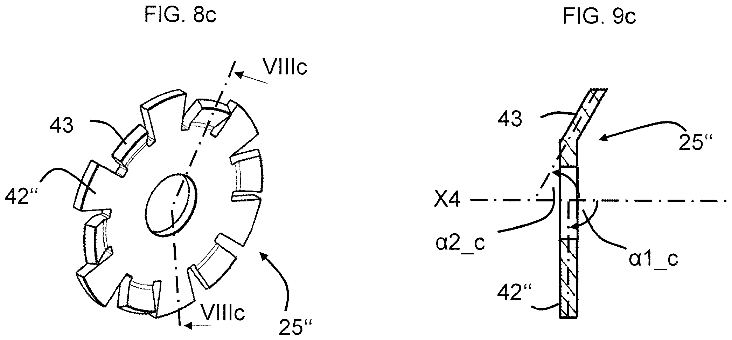

In Figur 8c und 9c ist eine dritte Ausgestaltung der Schleuderscheibe 25" dargestellt. Die Schleuderscheibe 25" weist sechs erste Abwurfabschnitte 42" auf, die in einem Abwurfwinkel α1_c von 90° zur Drehachse X4 angeordnet sind und das Öl des zweiten Ölbades 47 hauptsächlich in radialer Richtung ab schleudern. Daneben weist die Schleuderscheibe 25" sechs zweite Abwurfabschnitte 43 auf, die in einem Abwurfwinkel α2_c von beispielsweise ca. 70° zur Drehachse X4 angeordnet sind und das Öl des zweiten Ölbades 47 in eine Richtung mit einer radialen und einer axialen Komponente ab schleudern. Durch diese dritte Ausgestaltung der Schleuderscheibe 25" können mehrere Bereiche gezielt durch die Schleuderscheibe 25" mit Öl versorgt werden. Im Falle der Anordnung gemäß Figur 6 könnte durch die Schleuderscheibe 25" sowohl das Parkrad 20 mit Öl versorgen, das das Öl nachfolgend in den Kontaktbereich zwischen Parkrad 20 und Parkklinke 21 trägt, als auch Öl direkt in den Kontaktbereich zwischen Parkrad 20 und Parkklinke 21 fördern.

### Bezugszeichenliste

- 1; 1': Elektroantrieb
- 2: Gehäuseanordnung
- 3: Gehäuseelement
- 4: Gehäuseelement
- 5: Gehäuseelement
- 6: Zwischenplatte
- 7: Motorwelle
- 8: Antriebsritzel
- 9: Öffnung
- 10: Gegenrad
- 11: Kupplungsanordnung
- 12: Kupplungssitz
- 13: Zwischenwelle
- 14: Antriebsritzel
- 15: Differentialanordnung
- 16: Ringrad
- 17: Differentialgehäuse
- 18, 18`, 18": Lager
- 19, 19`, 19": Lager
- 20: Parkrad
- 21: Parkklinke
- 22: Stellmotor
- 23: Lager
- 24: Spindelwelle
- 25, 25', 25": Schleuderscheibe
- 26: Spindelmutter
- 27: Rückstellfeder
- 28: Steuerkonus
- 29: Hülse
- 30: Getriebeanordnung
- 31: Elektrische Maschine
- 32: Druckausgleichskanal
- 33: Getrieberaum
- 34: Parksperrenraum
- 35: Einlass
- 36: Einlass
- 37: Dichtelement
- 38: Labyrinthraum
- 39, 39': Blendenabschnitt
- 40, 40`: Sammelabschnitt
- 42, 42', 42": Abwurfabschnitt
- 43: Abwurfabschnitt
- 44, 44`: Seitenwellen
- 45: Untersetzungsgetriebe
- 46: Ölbad
- 47: Ölbad
- 48: Spindelantrieb
- 49: Freies Wellenende
- 51: Lager
- 52: Differentialrädersatz
- 53: Ausnehmung
- 54: Zahn

- Ra: Außenradius
- ΔR1: Eintauchtiefe Schleuderscheibe
- ΔR2: Eintauchtiefe Steuerkonus
- L: Niveau
- X: Drehachse
- α: Abwurfwinkel

## Patentansprüche

1. Getriebeanordnung für einen Elektroantrieb eines Kraftfahrzeugs, umfassend:
eine Antriebswelle (7),
ein Untersetzungsgetriebe (45), das von der Antriebswelle (7) drehend antreibbar ist und ausgestaltet ist, eine eingeleitete Drehbewegung vom Schnellen ins Langsame zu übersetzen,
eine Leistungsverzweigungseinheit (15), die mit dem Untersetzungsgetriebe (45) antriebsverbunden ist und ausgestaltet ist, eine eingeleitete Drehbewegung auf zwei Ausgangsteile (44, 44`) zu übertragen,
eine Parksperreneinheit mit einem Parksperrenrad (20), das mit einem drehmomentübertragenden Glied im Leistungspfad zwischen der Antriebswelle (7) und den Ausgangsteilen (44, 44`) drehfest verbunden ist, und mit einem steuerbaren Sperrelement (21), das mit dem Parksperrenrad (20) selektiv in Eingriff bringbar ist;
**dadurch gekennzeichnet,**
**dass** die Parksperreneinheit in einem Parksperrengehäuse (4, 5) angeordnet ist, das gegenüber einem Getriebegehäuse (3, 4), in dem zumindest Teile des Untersetzungsgetriebes (45) und der Leistungsverzweigungseinheit (15) angeordnet sind, flüssigkeitsdicht abgedichtet ist, sodass ein erstes Ölbad (46) in dem Getriebegehäuse (3, 4) von einem zweiten Ölbad (47) in dem Parksperrengehäuse (4, 5) separiert ist.

2. Getriebeanordnung nach Anspruch 1,
**dadurch gekennzeichnet,**
**dass** das Sperrelement (21) von einem Spindelantrieb (48) steuerbar ist, wobei der Spindelantrieb (48) eine um eine Drehachse (X4) drehend gelagerte Spindelwelle (24) mit einer Schleuderscheibe (25, 25', 25") aufweist, wobei die Schleuderscheibe (25, 25', 25") bei Rotation der Spindelwelle (24) Öl des zweiten Ölbades (47) in Richtung eines Kontaktbereiches des Parksperrenrades (20) und des Sperrelementes (21) fördert.

3. Getriebeanordnung nach Anspruch 2,
**dadurch gekennzeichnet,**
**dass** die Schleuderscheibe (25, 25', 25") zumindest einen Abwurfabschnitt (42, 42', 42") aufweist, der in einem Abwurfwinkel (α1, α2) zu der Drehachse (X4) der Spindelwelle (24) ausgerichtet ist, wobei der Abwurfwinkel (α1, α2) kleiner gleich 90° und/oder größer 25°, insbesondere größer 45°, ist.

4. Getriebeanordnung nach einem der Ansprüche 2 oder 3,
**dadurch gekennzeichnet,**
**dass** die Schleuderscheibe (25, 25', 25") bezüglich der Drehachse (X4) der Spindelwelle (24) in axialer Überdeckung mit dem Parksperrenrad (20) angeordnet ist.

5. Getriebeanordnung nach einem der Ansprüche 1 bis 4,
**dadurch gekennzeichnet,**
**dass** in einer Einbaulage der Getriebeanordnung in einem beruhigten Zustand ein Niveau (L1) des ersten Ölbades (46) von einem Niveau (L2) des zweiten Ölbades (47) abweicht.

6. Getriebeanordnung nach einem der Ansprüche 1 bis 5,
**dadurch gekennzeichnet,**
**dass** ein Niveau (L2) des zweiten Ölbades (47) in einer Einbaulage der Getriebeanordnung in einem beruhigten Zustand in vertikaler Richtung unterhalb eines Wirkbereiches des Parksperrenrades (20) liegt.

7. Getriebeanordnung nach Anspruch 6,
**dadurch gekennzeichnet,**
**dass** ein Niveau (L2) des zweiten Ölbades (47) in einer Einbaulage der Getriebeanordnung in einem beruhigten Zustand in vertikaler Richtung unterhalb der Drehachse (X4) der Spindelwelle (24) liegt.

8. Getriebeanordnung nach einem der Ansprüche 2 bis 7,
**dadurch gekennzeichnet,**
**dass** der Spindelantrieb (48) einen Steuerkonus (28) aufweist, durch den das Sperrelement (21) reversibel von einer Freigabestellung, in der das Parksperrenrad (20) gegenüber dem Sperrelement (21) frei drehen kann, in eine Sperrstellung, in der eine Drehung des Parksperrenrades (20) um die Längsachse (X2) durch das Sperrelement (21) blockiert ist, überführbar ist,
wobei der Steuerkonus (28) in das zweite Ölbad (47) in einer Einbaulage der Getriebeanordnung in einem beruhigten Zustand maximal mit zwei Dritteln eines größten Außenradius (Ra) des Steuerkonus (28), insbesondere maximal mit einem Drittel eines größten Außenradius (Ra) des Steuerkonus (28), eingetaucht ist.

9. Getriebeanordnung nach einem der Ansprüche 1 bis 8,
**dadurch gekennzeichnet,**
**dass** das Parksperrenrad (20) mit einem freien Wellenende (49) des drehmomentübertragenden Gliedes im Leistungspfad zwischen der Antriebswelle (7) und den Ausgangsteilen (44, 44`) drehfest verbunden ist.

10. Getriebeanordnung nach einem der Ansprüche 1 bis 9,
**dadurch gekennzeichnet,**
**dass** das Getriebegehäuse zumindest ein erstes Gehäuseteil (3) und ein zweites Gehäuseteil (4) umfasst und einen Getrieberaum einschließt, in dem das Untersetzungsgetriebe und die Leistungsverzweigungseinheit (15) zumindest teilweise angeordnet sind, und
**dass** das Parksperrengehäuse zumindest von dem zweiten Gehäuseteil (4) und einem dritten Gehäuseteil (5) gebildet wird und einen Parksperrenraum einschließt, in dem die Parksperreneinheit zumindest teilweise angeordnet ist.

11. Getriebeanordnung nach Anspruch 10,
**dadurch gekennzeichnet,**
**dass** der Getrieberaum und der Parksperrenraum durch einen Druckausgleichskanal (32) verbunden sind, wobei ein erster Einlass (35) des Druckausgleichskanals (32) in dem Getrieberaum und ein zweiter Einlass (36) des Druckausgleichskanals (32) in dem Parksperrenraum angeordnet ist.

12. Getriebeanordnung nach Anspruch 11,
**dadurch gekennzeichnet,**
**dass** der erste Einlass (35) oberhalb des zweiten Einlasses (36) angeordnet ist.

13. Getriebeanordnung nach einem der Ansprüche 11 oder 12,
**dadurch gekennzeichnet,**
**dass** angrenzend an den ersten Einlass (35) des Druckausgleichskanals (32) ein spritzölfreier Labyrinthraum (38) angeordnet ist.

14. Getriebeanordnung nach einem der Ansprüche 10 bis 13,
**dadurch gekennzeichnet,**
**dass** zumindest in einem von dem Getriebegehäuse (3, 4) und dem Parksperrengehäuse (4, 5) ein Entlüftungselement aufgenommen ist, durch das der Getrieberaum und/oder der Parksperrenraum gegenüber der Umwelt entlüftbar ist.

15. Elektroantrieb, umfassend:
eine Getriebeanordnung gemäß einem der Ansprüche 1 bis 14; und
eine Antriebseinheit (31), die mit dem Getriebegehäuse (3, 4) verbunden ist, wobei die Antriebswelle (7) der Getriebeanordnung von der Antriebseinheit (31) drehend antreibbar ist.

## Claims

1. A transmission assembly for an electric drive of a motor vehicle, comprising:
a drive shaft (7),
a reduction gearing (45), which is rotatably drivable by the drive shaft (7) and is configured to transmit a rotary motion introduced with high speed to a reduced speed,
a power distribution unit (15) drivingly connected to said reduction gearing (45) and configured to transmit an introduced rotary motion to two output parts (44, 44'),
a parking lock unit including a parking ratchet wheel (20) which is connected in a rotationally fixed manner to a torque-transmitting member in the power path between the drive shaft (7) and the output parts (44, 44'), and a controllable locking element (21) which is selectively engageable with the parking ratchet wheel (20);
**characterized in**
**that** the parking lock unit is arranged in a parking lock housing (4, 5) which is liquid-tightly sealed with respect to a transmission housing (3, 4) in which at least parts of the reduction gearing (45) and the power distribution unit (15) are arranged, so that a first oil bath (46) in the transmission housing (3, 4) is separated from a second oil bath (47) in the parking lock housing (4, 5).

2. Transmission assembly according to claim 1,
**characterized in**
**that** the locking element (21) is controllable by a spindle drive (48), wherein the spindle drive (48) comprises a spindle shaft (24) with a centrifugal disc (25, 25', 25") rotatably mounted about an axis of rotation (X4), wherein the centrifugal disc (25, 25', 25") upon rotation of the spindle shaft (24) conveys oil of the second oil bath (47) towards a contact region of the parking ratchet wheel (20) and of the locking element (21).

3. Transmission assembly according to claim 2,
**characterized in**
**that** the centrifugal disc (25, 25', 25") comprises at least one throwing portion (42, 42', 42") which is arranged at a throwing angle (α1, α2) relative to the axis of rotation (X4) of the spindle shaft (24), wherein the throwing angle (α1, α2) is less than or equal to 90° and/or greater than 25°, in particular greater than 45°.

4. Transmission assembly according to any one of claims 2 or 3,
**characterized in**
**that** the centrifugal disc (25, 25', 25") is arranged with respect to the axis of rotation (X4) of the spindle shaft (24) axially overlapping the parking ratchet wheel (20).

5. Transmission assembly according to any one of claims 1 to 4,
**characterized in**
**that**, in a state of installation of the transmission assembly in a calmed condition, a level (L1) of the first oil bath (46) differs from a level (L2) of the second oil bath (47).

6. Transmission assembly according to any one of claims 1 to 5,
**characterized in**
**that** a level (L2) of the second oil bath (47) in a state of installation of the transmission assembly in a calmed condition is vertically below an effective range of the parking ratchet wheel (20).

7. Transmission assembly according to claim 6,
**characterized in**
**that** a level (L2) of the second oil bath (47) in a state of installation of the transmission assembly in a calmed condition lies in the vertical direction below the axis of rotation (X4) of the spindle shaft (24).

8. Transmission assembly according to any one of claims 2 to 7,
**characterized in**
**that** the spindle drive (48) comprises a control cone (28) by which the locking element (21) is reversibly movable from a release position, in which the parking ratchet wheel (20) can rotate freely relative to the locking element (21), into a locking position, in which a rotation of the parking ratchet wheel (20) about the longitudinal axis (X2) is locked by the locking element (21),
wherein, in an installation position of the transmission assembly in a calmed state, the control cone (28) is immersed in the second oil bath (47) at most with two thirds of a largest outer radius (Ra) of the control cone (28), in particular at most with one third of a largest outer radius (Ra) of the control cone (28).

9. Transmission assembly according to any one of claims 1 to 8,
**characterized in**
**that** the parking ratchet wheel (20) is connected in a rotationally fixed manner to a free shaft end (49) of the torque-transmitting member in the power path between the drive shaft (7) and the output parts (44, 44').

10. Transmission assembly according to any one of claims 1 to 9,
**characterized in**
**that** the transmission housing comprises at least a first housing part (3) and a second housing part (4) and encloses a transmission chamber in which the reduction gearing and the power distribution unit (15) are at least partially arranged, and
**that** the parking lock housing is formed at least by the second housing part (4) and a third housing part (5) and encloses a parking lock chamber in which the parking lock unit is at least partially arranged.

11. Transmission assembly according to claim 10,
**characterized in**
**that** the transmission chamber and the parking lock chamber are connected by a pressure balance passage (32), wherein a first inlet (35) of the pressure balance passage (32) is arranged in the transmission chamber and a second inlet (36) of the pressure balance passage (32) arranged in the parking lock chamber.

12. Transmission assembly according to claim 11,
**characterized in**
**that** the first inlet (35) is arranged above the second inlet (36).

13. Transmission assembly according to any one of claims 11 or 12,
**characterized in**
**that** a labyrinth room (38) free of splash oil is arranged adjacent to the first inlet (35) of the pressure balance passage (32).

14. Transmission assembly according to any one of claims 10 to 13,
**characterized in**
**that** at least one of the transmission housing (3, 4) and the parking lock housing (4, 5) accommodates a venting element through which the transmission chamber and/or the parking lock chamber can be vented to the environment.

15. Electric drive, comprising:
a transmission assembly according to any one of claims 1 to 14; and
a drive unit (31) which is connected to the transmission housing (3, 4), wherein the drive shaft (7) of the transmission assembly is rotatably drivable by the drive unit (31).

## Revendications

1. Dispositif de transmission pour un entraînement électrique d'un véhicule automobile, comprenant :
un arbre d'entraînement (7),
un engrenage réducteur (45) qui peut être entraîné en rotation par l'arbre d'entraînement (7) et qui est conçu pour traduire un mouvement de rotation initié de rapide en lent,
une unité de dérivation de puissance (15) qui est reliée en engrenage réducteur (45) et qui est conçue pour transmettre un mouvement de rotation initié à deux pièces de sortie (44, 44'),
une unité de blocage de parking comprenant une roue de blocage de parking (20) reliée de manière non rotative à un élément de transmission de couple dans le chemin de puissance entre l'arbre d'entraînement (7) et les parties de sortie (44, 44'), et un élément de blocage contrôlable (21) pouvant être mis en prise de manière sélective avec la roue de blocage de parking (20) ;
**caractérisé en ce**
**que** l'unité de blocage de parking est disposée dans un boîtier de blocage de parking (4, 5) qui est étanche aux liquides par rapport à un boîtier de transmission (3, 4) dans lequel sont disposées au moins des parties de l'engrenage réducteur (45) et de l'unité de dérivation de puissance (15), de sorte qu'un premier bain d'huile (46) dans le boîtier de transmission (3, 4) est séparé d'un deuxième bain d'huile (47) dans le boîtier de blocage de parking (4, 5).

2. Dispositif de transmission selon la revendication 1,
**caractérisé en ce**
**que** l'élément de blocage (21) peut être commandé par un entraînement à broche (48), l'entraînement à broche (48) présentant un arbre de broche (24) logé de manière rotative autour d'un axe de rotation (X4) avec un disque centrifuge (25, 25', 25"), le disque centrifuge (25, 25', 25") transportant de l'huile du deuxième bain d'huile (47) lors de la rotation de l'arbre de broche (24) en direction d'une zone de contact de la roue de blocage de parking (20) et de l'élément de blocage (21).

3. Dispositif de transmission selon la revendication 2,
**caractérisé en ce**
**que** le disque centrifuge (25, 25', 25") présente au moins une section d'éjection (42, 42', 42") qui est orientée selon un angle d'éjection (α1, α2) par rapport à l'axe de rotation (X4) de l'arbre de broche (24), l'angle d'éjection (α1, α2) étant inférieur ou égal à 90° et/ou supérieur à 25°, notamment supérieur à 45°.

4. Dispositif de transmission selon l'une des revendications 2 ou 3,
**caractérisé en ce**
**que** le disque centrifuge (25, 25', 25") est disposé par rapport à l'axe de rotation (X4) de l'arbre de broche (24) en recouvrement axial avec la roue de blocage de parking (20).

5. Dispositif de transmission selon l'une quelconque des revendications 1 à 4,
**caractérisé en ce**
**que**, dans une position de montage du dispositif de transmission dans un état calmé, un niveau (L1) du premier bain d'huile (46) diffère d'un niveau (L2) du deuxième bain d'huile (47).

6. Dispositif de transmission selon l'une quelconque des revendications 1 à 5,
**caractérisé en ce**
**qu'**un niveau (L2) du deuxième bain d'huile (47), dans une position de montage du dispositif de transmission, se trouve dans un état calmé en direction verticale en dessous d'une zone d'action de la roue de blocage de parking (20).

7. Dispositif de transmission selon la revendication 6,
**caractérisé en ce**
**qu'**un niveau (L2) du deuxième bain d'huile (47), dans une position de montage du dispositif de transmission, se trouve dans un état calmé dans la direction verticale en dessous de l'axe de rotation (X4) de l'arbre de broche (24).

8. Dispositif de transmission selon l'une quelconque des revendications 2 à 7,
**caractérisé en ce**
**que** l'entraînement de broche (48) présente un cône de commande (28) par lequel l'élément de blocage (21) peut être transféré de manière réversible d'une position de libération, dans laquelle la roue de blocage de parking (20) peut tourner librement par rapport à l'élément de blocage (21), à une position de blocage, dans laquelle une rotation de la roue de blocage de parking (20) autour de l'axe longitudinal (X2) est bloquée par l'élément de blocage (21),
le cône de commande (28) étant immergé dans le deuxième bain d'huile (47) dans une position de montage du dispositif de transmission dans un état calmé au maximum avec deux tiers d'un plus grand rayon extérieur (Ra) du cône de commande (28), en particulier au maximum avec un tiers d'un plus grand rayon extérieur (Ra) du cône de commande (28).

9. Dispositif de transmission selon l'une quelconque des revendications 1 à 8,
**caractérisé en ce**
**que** la roue de blocage de parking (20) est reliée de manière solidaire en rotation à une extrémité d'arbre libre (49) de l'élément de transmission de couple dans le chemin de puissance entre l'arbre d'entraînement (7) et les parties de sortie (44, 44').

10. Dispositif de transmission selon l'une quelconque des revendications 1 à 9,
**caractérisé en ce**
**que** le boîtier de transmission comprend au moins une première partie de boîtier (3) et une deuxième partie de boîtier (4) et enferme un espace de transmission dans lequel l'engrenage réducteur et l' unité de dérivation de puissance (15) sont au moins partiellement disposés, et
**que** le boîtier de blocage de parking est formé au moins par la deuxième partie de boîtier (4) et une troisième partie de boîtier (5) et enferme un espace de blocage de parking dans lequel l'unité de blocage de parking est disposée au moins partiellement.

11. Dispositif de transmission selon la revendication 10,
**caractérisé en ce**
**que** l'espace de transmission et l'espace de blocage de parking sont reliés par un canal d'équilibrage de pression (32), une première entrée (35) du canal d'équilibrage de pression (32) étant disposée dans l'espace de transmission et une deuxième entrée (36) du canal d'équilibrage de pression (32) étant disposée dans l'espace de blocage de parking.

12. Dispositif de transmission selon la revendication 11,
**caractérisé en ce**
**que** la première entrée (35) est disposée au-dessus de la deuxième entrée (36).

13. Dispositif de transmission selon l'une des revendications 11 ou 12,
**caractérisé en ce**
**qu'**un espace labyrinthique (38) exempt d'huile de projection est disposé de manière adjacente à la première entrée (35) du canal de compensation de pression (32).

14. Dispositif de transmission selon l'une quelconque des revendications 10 à 13,
**caractérisé en ce**
**qu'**au moins dans l'un du boîtier de transmission (3, 4) et du boîtier de blocage de parking (4, 5) est logé un élément d'aération par lequel l'espace de transmission et/ou l'espace de blocage de parking peut être aéré par rapport à l'environnement.

15. Entraînement électrique, comprenant :
un dispositif de transmission selon l'une quelconque des revendications 1 à 14; et
une unité d'entraînement (31) qui est reliée au boîtier de transmission (3, 4), l'arbre d'entraînement (7) du dispositif de transmission pouvant être entraîné en rotation par l'unité d'entraînement (31).
